# EUROPÄISCHE PATENTSCHRIFT

(11) **EP 1 518 892 B1**
(45) Veröffentlichungstag und Bekanntmachung des Hinweises auf die Patenterteilung: **22.11.2006**
(21) Anmeldenummer: 04019142.1
(22) Anmeldetag: 12.08.2004
(51) Int. Cl.: C08K 3/32, C09J 11/04, C04B 22/16, C04B 24/24

(54) **Wässrige Polymerdispersionen mit hohem Feststoffgehalt, Verfahren zu deren Herstellung und deren Verwendung**
Aqueous polymer dispersions having a high solid content, process for their preparation and their use
Dispersion aqueuse de polymère à haute teneur en solides, procédé pour sa préparation et sa utilisation

(30) Priorität: 26.09.2003 DE 10344801
(43) Veröffentlichungstag der Anmeldung: 30.03.2005
(73) Patentinhaber: Celanese Emulsions GmbH, 61476 Kronberg/Ts. (DE)
(72) Erfinder: Apitz, Georg, Dr., 65817 Eppstein (DE); Cabrera, Ivan, Dr., 63303 Dreieich (DE)
(74) Vertreter: Ackermann, Joachim

(56) Entgegenhaltungen:
- EP-A- 0 551 568
- EP-A- 0 784 060
- US-B1- 6 284 343
- US-B1- 6 414 087
- US-B1- 6 444 748

## Beschreibung

Die Erfindung betrifft Polymerdispersionen mit hohem Feststoffgehalt und niedriger Viskosität, sowie ein Verfahren zu deren Herstellung und deren Verwendung, insbesondere als Fußbodenkleber oder als Fugenmasse.

Wässrige Polymerdispersionen werden in einer Vielzahl von Anwendungsgebieten eingesetzt, beispielsweise als Grundstoff für Farben, Lacke, Klebemittel, als Kaschiermittel für Papier oder als Zusatz in Baustoffen.

Die meisten Dispersionen haben einen Feststoffgehalt von 45 bis 60 Gew. %. Als Vorteile derartiger Dispersionen sind eine gegenüber Dispersionen mit geringeren Feststoffgehalten reduzierte Filmtrocknungszeiten sowie geringere Transportkosten anzusehen.

Bei zunehmendem Feststoffgehalt steigt allerdings die Viskosität drastisch an und kann während der Polymerisation neben der Bildung von Stippen sogar zur vollständigen Koagulation der Dispersion führen.

Aus dem Stand der Technik sind mehrere Verfahren zur Herstellung von hochkonzentrierten Polymerdispersionen mit relativ niederer Viskosität bekannt. Dabei werden in der Regel mono- oder multimodale Saatlatices eingesetzt, welche als Grundlage für die Polymerisation mindestens eines Monomers dienen oder es kommen Verfahren der Emulsionspolymerisation zum Einsatz, bei denen eine Vielzahl von Bedingungen eingehalten werden muss.

Bei der Herstellung von hochkonzentrierten Polymerdispersionen wird eine breite und/oder multimodale Verteilung von Teilchendurchmessern angestrebt, so dass die Polymerteilchen den zur Verfügung stehenden Raum möglichst gut, beispielsweise in Annäherung an eine dichteste Kugelpackung, ausfüllen.

Bei den bekannten Herstellungsverfahren hat man häufig die Schwierigkeit zu überwinden, dass die Durchmesser der anfänglich vorhandenen oder zwischenzeitlich entstehenden Teilchen sich im Verlaufe des Verfahrens einander angleichen.

Aus der EP-A-784,060 ist ein Copolymerlatex mit einem Feststoffgehalt von mindestens 67 Gew. % bekannt, der bei Raumtemperatur eine Viskosität von nicht mehr als 2.000 cP aufweist. Dieser Copolymerlatex wird erhalten durch Polymerisation von carboxylfunktionellen Monomeren mit weiteren ethylenisch ungesättigten Monomeren in Gegenwart von Emulgator, wobei bei einem Monomerumsatz von 40 bis 60% weiterer Emulgator zugegeben wird.

Aus der WO-A 96/11,234 ist eine wässrige Polymerdispersion mit Feststoffgehalten von mindestens 60 Gew. % und mindestens bimodaler Partikelverteilung bekannt. Diese wird durch Vorlage eines Saatlatex hergestellt, auf den radikalisch polymerisierbare Monomere gepfropft werden, wobei große und nicht-kugelförmige Partikel gebildet werden.
Aus der EP-A-81,083 ist ein Verfahren bekannt, bei dem zwei Polymerlatices mit unterschiedlicher mittlerer Teilchengröße vorgelegt und anschließend die Monomere polymerisiert werden.

Die EP-A-554,832 beschreibt die Herstellung von hochkonzentrierten Polymerdispersionen mit einem Feststoffgehalt von 40-70 Gew. % durch Copolymerisation von Alkylacrylaten und damit copolmerisierbaren polaren Comonomeren, wobei die Copolymerisation in Gegenwart eines hydrophoben Polymers und in Gegenwart eines copolymerisierbaren Emulgators erfolgt.

Aus den EP-A-567,811, EP-A-567,819, EP-A-568,831 und EP-A-568,834 sind Verfahren zur Herstellung von Dispersionen mit hohem Feststoffgehalten bekannt, bei denen jeweils eine Reihe komplizierter Verfahrensschritte eingehalten werden muss.

Bei der EP-A 567811 wird ein extrem feinteiliger Latex zumindest teilweise vorgelegt und die Monomere werden unter Einhaltung mehrerer, sehr komplexer Verfahrensbedingungen polymerisiert.

Bei der EP-A-567,819 wird ein Saatlatexgemisch mit Latexteilchen bis 400 nm Teilchengröße und Latexteilchen bis 100 nm Teilchengröße vorgelegt und die Monomeren werden unter Einhaltung sehr komplexer Verfahrensbedingungen polymerisiert.

Die EP-A-567831 beschreibt ein Verfahren zur Herstellung von hochkonzentrierten Dispersionen, wobei ein grobteiliger Latex vorgelegt wird und ein feinteiliger Latex sowie die Monomeren zudosiert werden.

Die EP-A-568,834 schließlich beschreibt ein Verfahren, bei dem zwei Saatlatices, von denen einer sowohl grobteilige als auch feinteilige Polymerteilchen enthält, vorgelegt werden und die Monomere zudosiert werden.

Den bekannten Verfahren zur Herstellung von hochkonzentrierten Dispersionen ist gemeinsam, dass diese relativ komplexe Verfahrensmaßnahmen, oft in Kombination mit aufwendigen Saatlatex-Techniken, aufweisen.

Bei einer Gruppe der vorbekannten Verfahren zur Herstellung von hochkonzentrierten Polymerdispersionen verwendet man mehrere Saatlatices unterschiedlicher Teilchengrößen, die zu unterschiedlichen Phasen des Polymerisationsverfahrens zugegeben werden.

Bei einer weiteren Gruppe von vorbekannten Verfahren wird ein Saatlatex in situ erzeugt und zu einem späteren Zeitpunkt des Polymerisationsverfahrens wird die Nukleation sekundärer und weiterer Teilchenpopulationen ausgelöst.

Ausgehend von diesem Stand der Technik wird mit der vorliegenden Erfindung ein Verfahren zur Verfügung gestellt, mit welchem auf einfache Art und Weise praktisch stippenfreie und koagulatfreie Dispersionen mit einem hohen Feststoffgehalt hergestellt werden können.

Mit der vorliegenden Erfindung wird darüber hinaus ein Verfahren zur Herstellung von Polymerdispersionen mit hohem Feststoffgehalt zur Verfügung gestellt, das ohne den Einsatz von Saatlatex auskommt.

Eine weitere Aufgabe der vorliegenden Erfindung ist das Bereitstellen von praktisch stippen- und koagulatfreien Polymerdispersionen mit hohem Feststoffgehalt und niedriger Viskosität, die besonders schnell trocknen / verfilmen, was sich bei Verwendung in Fußbodenkleberformulierungen in einem raschen Auftreten von "Fadenzug" bemerkbar macht.

Die vorliegende Erfindung betrifft ein wässriges Polymerdispersion mit einer mindestens trimodalen Partikelgrößenverteilung abgeleitet von mindestens einem ethylenisch ungesättigten Monomer und mit einem Feststoffgehalt von mindestens 60 Gew.%, bezogen auf die Polymerdispersion, enthaltend mindestens ein wasserlösliches Salz einer phosphorhaltigen Säure.

Die vorliegende Erfindung betrifft ferner ein Verfahren zur Herstellung von wässrigen Polymerdispersionen mit einer mindestens trimodalen Partikelgrößenverteilung durch Emulsionspolymerisation, wobei mindestens ein ethylenisch ungesättigtes Monomer in wässriger Phase in Gegenwart mindestens eines Emulgators und mindestens eines Initiators radikalisch polymerisiert wird, dadurch gekennzeichnet, dass die Emulsionspolymerisation in Gegenwart mindestens eines wasserlöslichen Salzes einer phosphorhaltigen Säure durchgeführt wird.
Die Auswahl der zur Herstellung der erfindungsgemäßen Polymerdispersionen geeigneten ethylenisch ungesättigten Monomeren ist an sich nicht kritisch. Es kommen alle üblicherweise zur Herstellung von wässrigen Polymerdispersionen verwendeten Monomeren in Frage, die in sinnvoller Weise den Anforderungen der Praxis entsprechend miteinander kombiniert werden können.

Typische ethylenisch ungesättigte Monomere sind Vinylester von gesättigten Carbonsäuren, Ester bzw. Halbester von ethylenisch ungesättigten Carbonsäuren mit gesättigten Alkoholen, ethylenisch ungesättigte aliphatische Kohlenwasserstoffe oder aromatische Kohlenwasserstoffe mit ethylenisch ungesättigten Resten, ethylenisch ungesättigte ionische Monomere, ethylenisch ungesättigte nichtionische Monomere sowie weitere ethylenisch ungesättigte Monomere, die nicht in eine der oben erwähnten Klassen fallen.

Bevorzugte ethylenisch ungesättigte Monomere sind Vinylester von Carbonsäuren mit 1 bis 18 Kohlenstoffatomen, Ester bzw. Halbester ethylenisch ungesättigter C₃-C₈-Mono- und Dicarbonsäuren mit gesättigten C₁-C₁₈ Alkanolen, aromatische oder aliphatische ethylenisch ungesättigte Kohlenwasserstoffe, die gegebenenfalls halogen substituiert sind oder aromatische Kohlenwasserstoffe mit ethylenisch ungesättigten Resten.

Als Vinylester von Carbonsäuren mit 1 bis 18 Kohlenstoffatomen können alle dem Fachmann bekannten Monomere eingesetzt werden.

Besonders bevorzugt sind jedoch Vinylester von Carbonsäuren mit 1 bis 8 Kohlenstoffatomen, wie zum Beispiel Vinylformiat, Vinylacetat, Vinylpropionat, Vinylisobutyrat, Vinylpivalat und Vinyl-2-ethylhexanoat; Vinylester von gesättigten, verzweigten Monocarbonsäuren mit 9, 10 oder 11 Kohlenstoffatomen im Säurerest (^{®}Versaticsäuren); Vinylester von längerkettigen, gesättigten und ungesättigten Fettsäuren, beispielsweise Vinylester von Fettsäuren mit 8 bis 18 Kohlenstoffatomen, wie zum Beispiel Vinyllaurat und Vinylstearat; Vinylester der Benzoesäure oder der p-tert.-Butylbenzoesäure sowie Gemische derselben, wie zum Beispiel Gemische aus Vinylacetat und einer Versaticsäure oder aus Vinylacetat und Vinyllaurat. Insbesondere bevorzugt ist Vinylacetat.

Als Ester bzw. Halbester ethylenisch ungesättigter C₃-C₈-Mono- und Dicarbonsäuren mit gesättigten C₁-C₁₈ Alkanolen können alle dem Fachmann bekannten Monomere eingesetzt werden.

Dabei werden die Ester bzw. Halbester ethylenisch ungesättigter C₃-C₈-Mono- und Dicarbonsäuren mit C₁-C₁₂-Alkanolen bevorzugt, wobei Ester bzw. Halbester mit C₁-C₈-Alkanolen oder C₅-C₈-Cycloalkanolen besonders bevorzugt sind. Geeignete C₁-C₁₈-Alkanole sind beispielsweise Methanol, Ethanol, n-Propanol, i-Propanol, 1-Butanol, 2-Butanol, i-Butanol, tert.-Butanol, n-Hexanol, 2-Ethylhexanol, Laurylalkohol und Stearylalkohol. Geeignete Cycloalkanole sind beispielsweise Cyclopentanol und Cyclohexanol.

Besonders bevorzugt sind die Ester der Acrylsäure, der Methacrylsäure, der Crotonsäure, der Maleinsäure, der Itaconsäure und der Citraconsäure. Insbesondere bevorzugt sind die Ester der Acrylsäure und/oder der Methacrylsäure, wie z.B. (Meth)acrylsäuremethylester, (Meth)acrylsäureethylester, (Meth)acrylsäureisopropylester, (Meth)acrylsäure-n-butylester, (Meth)acrylsäureisobutylester, (Meth)acryl-säure-1-hexylester, (Meth)acrylsäure-tert.-butylester, (Meth)acryl-säure-2-ethylhexylester, sowie die Ester der Maleinsäure, wie z.B. Maleinsäuredimethylester, Maleinsäuredi-n-butylester, Maleinsäure-di-n-octylester und Maleinsäuredi-2-ethylhexylester.

Gegebenenfalls können die genannten Ester auch mit Epoxy- und/oder Hydroxylgruppen substituiert sein.

Bevorzugte ethylenisch ungesättigte aliphatische Kohlenwasserstoffe oder aromatische Kohlenwasserstoffe mit ethylenisch ungesättigten Resten sind Ethen, Propen, 1-Buten, 2-Buten, Isobuten, Styrol, Vinyltoluol, Vinylchlorid und Vinylidenchlorid, wobei Ethen und Styrol bevorzugt sind.

Unter ethylenisch ungesättigten, ionischen Monomeren werden in der vorliegenden Anmeldung solche ethylenisch ungesättigten Monomere verstanden, die eine Wasserlöslichkeit von mehr als 50 g/l, vorzugsweise mehr als 80 g/l, bei 25°C und 1 bar aufweisen und die in verdünnter wässriger Lösung bei pH 2 und/oder pH 11 zu mehr als 50 %, vorzugsweise mehr als 80 %, als ionische Verbindung vorliegen oder aber bei pH 2 und/oder pH 11 durch Protonierung oder Deprotonierung zu mehr als 50 %, vorzugsweise mehr als 80 %, in eine ionische Verbindung transformiert werden.

Beispiele für bevorzugte ethylenisch ungesättigte, ionische Monomere sind solche Verbindungen, die mindestens eine Carbonsäure-, eine Sulfonsäure-, eine Phosphorsäure- oder eine Phosphonsäuregruppe in direkter Nachbarschaft zur Doppelbindungseinheit tragen oder aber über eine Spacergruppe mit dieser verbunden sind.

Als Beispiele seien genannt: ethylenisch ungesättigte C₃-C₈-Monocarbonsäuren sowie deren Anhydride, ethylenisch ungesättigte C₅-C₈-Dicarbonsäuren sowie deren Anhydride, und Halbester von ethylenisch ungesättigten C₄-C₈₋Dicarbonsäuren.

Besonders bevorzugt sind ungesättigte Monocarbonsäuren, wie z.B. Acrylsäure und Methacrylsäure sowie deren Anhydride; ungesättigte Dicarbonsäuren, wie z.B. Maleinsäure, Itaconsäure und Citraconsäure sowie deren Halbester mit C₁-C₁₂-Alkanolen, wie zum Beispiel Monomethylmaleinat und Mono-n-butylmaleinat.

Weitere bevorzugte ethylenisch ungesättigte, ionische Monomere sind ethylenisch ungesättigte Sulfonsäuren wie Vinylsulfonsäure, 2-Acrylamido--2-methylpropansulfonsäure, 2-Acryloxyethansulfonsäure und 2-Methacryloxyethansulfonsäure, 3-Acryloxy- und 3-Methacryloxypropan-sulfonsäure, Vinylbenzolsulfonsäure, sowie ethylenisch ungesättigte Phosphonsäuren, wie Vinylphosphonsäure.

Außerdem können neben den genannten Säuren auch deren Salze eingesetzt werden, vorzugsweise deren Alkalimetall- oder Ammoniumsalze und besonders bevorzugt deren Natriumsalze, wie beispielsweise die Natriumsalze der Vinylsulfonsäure und der 2-Acrylamidopropansulfonsäure.

Die genannten ethylenisch ungesättigten, freien Säuren liegen in wässriger Lösung bei pH 11 überwiegend in Form ihrer konjugierten Basen in anionischer Form vor und lassen sich, wie die genannten Salze, als anionische Monomere bezeichnen.

Unter ethylenisch ungesättigten, nichtionischen Monomeren werden in der vorliegenden Anmeldung solche ethylenisch ungesättigten Verbindungen verstanden, die eine Wasserlöslichkeit von weniger als 80 g/l, vorzugsweise weniger als 50 g/l, bei 25°C und 1 bar aufweisen und die in verdünnter wässriger Lösung bei pH 2 und pH 11 überwiegend in nichtionischer Form vorliegen.

Als ethylenisch ungesättigte, nichtionische Monomere bevorzugt sind sowohl die Amide der im Zusammenhang mit den ethylenisch ungesättigten, ionischen Monomeren genannten Carbonsäuren, wie beispielsweise (Meth)acrylamid und Acrylamid, sowie wasserlösliche N-Vinyllactame, wie beispielsweise N-Vinylpyrrolidon, als auch solche Verbindungen, die als ethylenisch ungesättigte Verbindungen kovalent gebundene Polyethylenglykoleinheiten enthalten, wie beispielsweise Polyethylenglykolmono- oder -diallylether oder die Ester ethylenisch ungesättigter Carbonsäuren mit Polyalkylenglykolen.

Als weitere ethylenisch ungesättigte Monomere, die nicht in eine der oben erwähnten Klassen fallen kommen unter anderem Siloxangruppen enthaltende Monomere der allgemeinen Formel RSi(CH₃)₀₋₂(OR¹)₃₋₁ in Frage, wobei R die Bedeutung CH₂=CR²-(CH₂)₀₋₁ oder CH₂=CR²CO₂-(CH₂)₁₋₃ hat, R¹ ein unverzweigter oder verzweigter, gegebenenfalls substituierter Alkylrest mit 3 bis 12 C-Atomen ist, der gegebenenfalls durch eine Ethergruppe unterbrochen sein kann, und R² für H oder CH₃ steht.

Weiterhin kommen als weitere ethylenisch ungesättigte Monomere, die nicht in eine der oben erwähnten Klassen fallen, Nitrile von ethylenisch ungesättigten C₃-C₈-Carbonsäuren, wie z.B. Acrylnitril und Methacrylnitril, sowie haftungsverbessernde und vernetzende Monomere in Frage. Auch können C₄-C₈-konjugierte Diene, wie z.B. 1,3-Butadien, Isopren und Chloropren als ethylenisch ungesättigte Monomere eingesetzt werden.

Zu den haftungsverbessernden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen.

Die haftungsvermittelnden Monomeren können gegebenenfalls in Mengen von 0,1 bis 10 Gew.-%, vorzugsweise von 0,5 bis 5 Gew.-%, bezogen auf die Gesamtmenge der Monomere, eingesetzt werden.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat, Triethylenglykoldi(meth)acrylat, Divinyladipat, Allyl(meth)acrylat, Vinylcrotonat, Methylenbisacrylamid, Hexandioldi(meth)acrylat, Pentaerythroldi(meth)acrylat und Trimethylolpropantri(meth)acrylat.

Die vernetzenden Monomere können gegebenenfalls in Mengen von 0,02 bis 5 Gew. %, vorzugsweise von 0,02 bis 1 Gew. %, bezogen auf die Gesamtmenge der Monomere, eingesetzt werden.

Bei der Auswahl der geeigneten Monomeren oder Monomerkombinationen sind die allgemein anerkannten Gesichtspunkte zur Herstellung von wässrigen Dispersionen zu berücksichtigen. So ist insbesondere darauf zu achten, dass die Auswahl der Monomeren zur Herstellung von Copolymerisaten so zu treffen ist, dass nach der Lage der Polymerisationsparameter die Bildung von Copolymeren zu erwarten ist.

Bevorzugte ethylenisch ungesättigte Hauptmonomere sind Ester der Acrylsäure und/oder der Methacrylsäure mit primären und sekundären gesättigten einwertigen Alkoholen mit 1 bis 18 Kohlenstoffatomen, beispielsweise mit Methanol, Ethanol, Propanol, Butanol, 2-Ethylhexylalkohol, sowie mit cycloaliphatischen Alkoholen sowie mit längerkettigen Fettalkoholen.

Weitere bevozugte ethylenisch ungesättigte Monomere, die in Kombination mit den oben beschriebenen Monomeren eingesetzt werden, sind a,β-ungesättigte Dicarbonsäuren, wie Maleinsäure, Itaconsäure oder Citraconsäure, sowie deren Mono- oder Diester mit gesättigten einwertigen aliphatischen Alkoholen mit 1 bis 18 Kohlenstoffatomen.

Der Anteil dieser Comonomeren an der Gesamtmonomermenge beträgt üblicherweise bis zu 20 Gew. %, vorzugsweise bis zu 10 Gew. %, bezogen auf die Gesamtmenge der eingesetzten Monomeren.

Weitere bevorzugt eingesetzte ethylenisch ungesättigte Monomere sind Vinylester von gesättigten Fettsäuren mit ein bis acht Kohlenstoffatomen, wie Vinylformiat, Vinylacetat, Vinylpropionat, Vinylisobutyrat, Vinylpivalat, Vinyl-2-ethylhexanoat; Vinylester von gesättigten verzweigten Monocarbonsäuren mit neu bis zehn Kohlenstoffatomen, Vinylester von gesättigten oder ungesättigten Fettsäuren mit zehn bis zwanzig Kohlenstoffatomen, wie beispielsweise Vinyllaurat, Vinylstearat; sowie Vinylester der Benzoesäure und substituierter Derivate der Benzoesäure wie Vinyl-p-tert.-butylbenzoat. Besonders bevorzugt wird Vinylacetat.

Die genannten Vinylester können im Polymerisat auch nebeneinander vorliegen. Der Anteil dieser Vinylester im Polymerisat beträgt in der Regel mindestens 50 Gew. %, vorzugsweise mindestens 80 Gew. %.

Weitere bevorzugte Comonomere sind α-Olefine mit zwei bis achtzehn Kohlenstoffatomen, beispielsweise Ethylen, Propylen oder Butylen; sowie aromatische Kohlenwasserstoffe mit einem Vinylrest, wie Styrol, Vinyltoluol, Vinylxylol; sowie halogenierte ungesättigte aliphatische Kohlenwasserstoffe, wie Vinylchlorid, Vinylfluorid, Vinylidenchlorid, Vinylidenfluorid.

Der Anteil dieser Comonomeren an der Gesamtmonomermenge beträgt bis zu 50 Gew. %, vorzugsweise bis zu 20 Gew. %.

Weitere bevorzugte Comonomere sind mehrfach ethylenisch ungesättigte Monomere, wie Diallylphthalat, Diallylmaleinat. Triallylcyanurat, Tetraallyloxyethan, Divinylbenzol, Butandiol-1,4-dimethacrylat, Triethylenglykoldimethacrylat, Divinyladipat, Allyl(meth)-acrylat, Vinylcrotonat, Methylenbis(meth)acrylamid, Hexandioldi(meth)acrylat, Pentaerythroldi(meth)acrylat und Trimethylolpropantri(meth)acrylat.

Der Anteil dieser Comonomeren an der Gesamtmonomermenge beträgt in der Regel bis zu 5 Gew. %, vorzugsweise 2 bis 4 Gew. %.

Besonders geeignet werden Comonomere mit N-funktionellen Gruppen eingesetzt, darunter insbesondere (Meth)acrylamid, Allylcarbamat, Acrylnitril, N-Methylol(meth)acrylamid, N-Methylolallylcarbamat sowie die N-Methylolester, -alkylether oder Mannichbasen des N-Methylol(meth)acrylamids oder des N-Methylolallylcarbarnats, Acrylamidoglykolsäure, Acrylamidomethoxyessigsäuremethylester, N-(2,2-Dimethoxy-1-hydroxyethyl)-acrylamid, N-Dimethylaminopropyl(meth)acrylamid, N-Methyl(meth)acrylamid, N-Butyl(meth)acrylamid, N- Cyclohexyl(meth)acrylamid, N-Dodecyl(meth)-acrylamid, N-Benzyl(meth)acrylamid, p-Hydroxyphenyl(meth)acrylamid, N-(3-Hydroxy-2,2-dimethylpropyl)-methacryl-amid, Ethylimidazolidonmethacrylat, N-Vinylformamid und N-Vinylpyrrolidon.

Der Anteil dieser Comonomeren an der Gesamtmonomermenge beträgt in der Regel bis zu 5 Gew. %, vorzugsweise 2 bis 4 Gew. %.

Weiterhin besonders geeignete Comonomere, sind hydroxyfunktionelle Monomere wie Hydroxyethyl(meth)acrylat, Hydroxypropyl(meth)acrylat sowie deren Addukte mit Ethylenoxid oder Propylenoxid.

Der Anteil dieser Comonomeren an der Gesamtmonomerenmenge beträgt in der Regel bis zu 5 Gew. %, vorzugsweise 2 bis 4 Gew. %.

Besonders geeignet sind ferner über Carbonylgruppen vernetzbare oder selbstvernetzende Comonomere aus der Gruppe Diacetonacrylamid, Allylacetoacetat, Vinylacetoacetat sowie Acetoacetoxyethyl(meth)acrylat.

Der Anteil dieser Comonomeren an der Gesamtmonomerenmenge beträgt in der Regel bis zu 5 Gew. %, vorzugsweise 2 bis 4 Gew. %.

Die Menge der im erfindungsgemäßen Verfahren eingesetzten ethylenisch ungesättigten Monomeren oder Kombinationen von Monomeren ist so zu wählen, dass der angestrebte Feststoffgehalt der wässrigen Dispersion erreicht werden kann. Dabei kann die Gesamtmenge an Monomer bereits zu Beginn der Emulsionspolymerisation vorgelegt werden oder bevorzugt wird eine geringe Menge des Monomeren vorgelegt und der Rest wird nach dem Starten der Polymerisation in ein oder mehreren Schritten und besonders bevorzugt kontinuierlich zugegeben.

Vorzugsweise beträgt die Masse der eingesetzten ethylenisch ungesättigten Monomeren, bezogen auf die Gesamtmasse der Dispersion mindestens 65 Gew. %, insbesondere 65 bis 75 Gew. %.

Die erfindungsgemäße Polymerisation der ethylenisch ungesättigten Monomeren erfolgt in Gegenwart mindestens eines Emulgators für das ethylenisch ungesättigte Monomere. Dabei kann es sich um nichtionische und/oder um ionische Emulgatoren handeln.

Geeignete nichtionische Emulgatoren sind araliphatische und aliphatische nichtionische Emulgatoren, wie zum Beispiel ethoxylierte Mono-, Di- und Trialkylphenole (EO-Grad: 3 bis 50, Alkylrest C₄ bis C₉), Ethoxylate langkettiger Alkohole (EO-Grad: 3 bis 50, Alkylrest: C₈ bis C₃₆), sowie Polyethylenoxid/Polypropylenoxid-Blockcopolymere.

Bevorzugt werden Ethoxylate langkettiger Alkanole (Alkylrest: C₁₀ bis C₂₂, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten C₁₂-C₁₈-Alkylrest und einem Ethoxylierungsgrad von 8 bis 50, eingesetzt.

Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208).

Zu den anionischen Emulgatoren zählen Alkali- und Ammoniumsalze von Alkylsulfaten (Alkylrest: C₈ bis C₁₈), Alkylphosphonaten (Alkylrest: C₈ bis C₁₈), von Schwefelsäurehalbestern oder Phosphorsäuremono- und diestern ethoxylierter Alkanole (EO-Grad: 2 bis 50, Alkylrest: C₈ bis C₂₂) und ethoxylierter Alkylphenole (EO-Grad: 3 bis 50, Alkylrest: C₄ bis C₉), von Alkylsulfonsäuren (Alkylrest: C₁₂ bis C₁₈), von Alkylarylsulfonsäuren (Alkylrest: C₉ bis C₁₈), von Sulfobemsteinsäurehalbestern und Sulfobernsteinsäurediestern von Alkanolen (Alkylrest: C₈ bis C₂₂) und ethoxylierten Alkanolen (EO-Grad: 2 bis 50, Alkylrest: C₈ bis C₂₂), sowie nicht-ethoxylierter und ethoxylierter Alkylphenole (EO-Grad: 3 bis 50, Alkylrest: C₄ bis C₉).

In der Regel werden die aufgeführten Emulgatoren als technische Gemische eingesetzt, wobei sich die Angaben zu Länge von Alkylrest und EO-Kette auf das jeweilige Maximum der in den Mischungen vorkommenden Verteilungen bezieht.

Beispiele aus den genannten Emulgatorklassen sind ^{®}Texapon K12 (Natriumlaurylsulfat der Firma Cognis), ^{®}Emulsogen EP (C₁₃-C₁₇-Alkylsulfonat der Firma Clariant), ^{®}Maranil A 25 IS (Natrium-n-alkyl-(C₁₀-C₁₃) benzolsulfonat der Firma Cognis), ^{®}Genapol liquid ZRO (Natrium C₁₂/C₁₄-Alkylethersulfat mit 3 EO-Einheiten der Firma Clariant), ^{®}Hostapal BVQ-4 (Natriumsalz eines Nonylphenolethersulfats mit 4 EO-Einheiten der Firma Clariant), Aerosol MA 80 (Natriumdihexylsulfosuccinat der Firma Cyctec Industries), Aerosol A-268 (Dinatriumisodecylsulfosuccinat von Cytec Industries) und Aerosol A-103 (Dinatriumsalz eines Halbesters der Sulfobernsteinsäure mit einem ethoxylierten Nonylphenol der Firma Cytec Industries).

Darüber hinaus können sowohl ionische wie auch nichtionische Emulgatoren verwendet werden, die als zusätzliche Funktionalität eine oder mehrere ungesättigte Doppelbindungseinheiten enthalten und während des Polymerisationsprozesses in die entstehenden Polymerketten eingebaut werden können. Diese als copolymerisierbare Emulgatoren ("Surfmers") bezeichnete Verbindungen sind dem Fachmann allgemein bekannt. Beispiele finden sich in einer Reihe von Veröffentlichungen (z.B.: "Reactive surfactants in heterophase polymerization" von A. Guyot et al. in Acta Polym. 1999, S. 57-66) und sind im Handel erhältlich (z.B. ^{®}Emulsogen R 208 der Firma Clariant oder Trem LF 40 der Firma Cognis).

Die Mengen der eingesetzten Emulgatoren liegen in den üblicherweise einzuhaltenden Grenzen.

In der Regel werden bis zu etwa 10 Gew. %, vorzugsweise bis zu 5 Gew. %, bezogen auf die Gesamtmenge der zur Herstellung der Dispersionen eingesetzten Monomeren, verwendet.

Dabei kann die Gesamtmenge an Emulgator bereits zu Beginn der Emulsionspolymerisation vorgelegt werden oder bevorzugt wird ein Teil des Emulgators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Initiatoren.

Die erfindungsgemäße Polymerisation der ethylenisch ungesättigten Monomeren erfolgt in Gegenwart mindestens eines Initiators für die radikalische Polymerisation des/der ethylenisch ungesättigten Monomeren.

Als Initiatoren für die radikalische Polymerisation zum Starten und Weiterführen der Polymerisation während der Herstellung der Dispersionen kommen alle bekannten Initiatoren in Betracht, die in der Lage sind, eine radikalische, wässrige Emulsionspolymerisation zu starten.

Es kann sich dabei sowohl um Peroxide, wie z.B. Alkalimetallperoxodisulfate als auch um Azoverbindungen handeln.

Als Polymerisationsinitiatoren können auch sogenannte Redoxinitiatoren verwendet werden, die aus mindestens einem organischen und/oder anorganischen Reduktionsmittel und mindestens einem Peroxid und/oder Hydroperoxid zusammengesetzt sind, wie z.B. tert.-Butylhydroperoxid mit Schwefelverbindungen, wie z.B. dem Natriumsalz der Hydroxymethansulfinsäure, Natriumsulfit, Natriumdisulfit, Natriumthiosulfat und Acetonbisulfitaddukt, oder Wasserstoffperoxid mit Ascorbinsäure oder Kombinationen von schwefelhaltigen Verbindungen wie z.B. Brüggolite® FF07 und FF06 ; als weitere Reduktionsmittel, die mit Peroxiden Radikale bilden können auch reduzierende Zucker eingesetzt werden.

Auch können kombinierte Systeme verwendet werden, die eine geringe Menge einer im Polymerisationsmedium löslichen Metallverbindung enthalten, deren metallische Komponente in mehreren Wertigkeitsstufen auftreten kann, wie z.B. Ascorbinsäure/Eisen(II)sulfat/Wasserstoffperoxid, wobei an Stelle von Ascorbinsäure auch häufig das Natriumsalz der Hydroxymethansulfinsäure, Acetonbisulfitaddukt, Natriumsulfit, Natriumhydrogensulfit oder Natriumbisulfit und an Stelle von Wasserstoffperoxid organische Peroxide wie z.B. tert.-Butylhydroperoxid oder Alkaliperoxodisulfate und/oder Ammoniumperoxodisulfat verwendet werden. Anstelle des genannten Acetonbisulfitaddukts können auch weitere dem Fachmann bekannte Bisulfitaddukte eingesetzt werden, wie sie beispielsweise in der EP-A-778,290 und in den darin zitierten Literaturstellen beschrieben sind.

Weitere bevorzugte Initiatoren sind Peroxodisulfate, wie z.B. Natriumperoxodisulfat.

Die Menge der im erfindungsgemäßen Verfahren eingesetzten Initiatoren oder Kombinationen von Initiatoren bewegt sich im Rahmen der für wässrige Emulsionspolymerisationen üblich ist. In der Regel wird die Menge des eingesetzten Initiators 2 Gew. %, bezogen auf die Gesamtmenge der zu polymerisierenden Monomeren, nicht überschreiten.

Vorzugsweise beträgt die Menge der eingesetzten Initiatoren, bezogen auf die Gesamtmenge der zu polymerisierenden Monomeren, 0,05 bis 1,0 Gew. %.

Dabei kann die Gesamtmenge an Initiator bereits zu Beginn der Emulsionspolymerisation vorgelegt werden oder bevorzugt wird ein Teil des Initiators zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Emulgatoren,

Die Emulsionspolymerisation der ethylenisch ungesättigten Monomeren erfolgt in Gegenwart mindestens eines wasserlöslichen Salzes einer phosphorhaltigen Säure.

Darunter sind im Rahmen dieser Beschreibung Salze zu verstehen, die sich von einer beliebigen phosphorhaltigen Säure, wie der phosphorigen Säure, der Phosphonsäure, der Phosphinsäure oder besonders bevorzugt der Phosphorsäure, ableiten.
Die erfindungsgemäß eingesetzten Salze sind wasserlöslich. Darunter werden im Rahmen dieser Beschreibung Salze verstanden, die bei 25°C zu mindestens 10 g/l in Wasser löslich sind.

Erfindungsgemäß werden bevorzugt beliebige Phosphate eingesetzt, sofern diese wasserlöslich sind. Es kann sich also um Monophosphate oder um Polyphosphate in linearer oder cyclischer Form (= Metaphosphate) handeln. Ferner können kondensierte Phosphate eingesetzt werden, die verzweigt oder vernetzt sein können.

Als Gegenionen der erfindungsgemäß eingesetzten wasserlöslichen Salze von phosphorhaltigen Säuren lassen sich beliebige Kationen einsetzen, solange die Salze wasserlöslich sind. Beispiele sind Alkali- oder Erdalkalikationen oder Ammonium- oder Phosphoniumkationen.

Bevorzugt werden Natrium-, Kalium- und Ammoniumsalze.

Beispiele für bevorzugt eingesetzte Salze von phosphorhaltigen Säuren sind Natriummonophosphate, wie Mononatrium-dihydrogenmonophosphat, Dinatrium-hydrogenmonophosphat oder Trinatriummonophosphat sowie Dinatrium-dihydrogenphosphat, Tetranatrium-diphosphat, Pentanatriumtriphosphat, oder höher kondensierte Natrium-polyphosphate, wie Madrellsches Salz, Grahamsches Salz oder Kurrolsches Salz, sowie Natriumtrimetaphosphat und Natrium-hexametaphosphat oder die entsprechenden Ammoniumsalze dieser Phosphate.

Bevorzugt eingesetzte Salze von phosphorhaltigen Säuren sind wasserlösliche Phosphate einschließlich der Hydrogenphosphate.

Beispiele dafür sind wasserlösliche Ammonium-, Alkali- oder Erdalkaliphosphate sowie die entsprechenden Hydrogenphosphate.

Die Menge der erfindungsgemäß eingesetzten Salze einer phosphorhaltigen Säure oder deren Kombinationen ist so zu wählen, dass der angestrebte Feststoffgehalt erreicht werden kann. In der Regel wird die Menge der eingesetzten Salze von phosphorhaltigen Säuren 5 Gew. %, bezogen auf die Gesamtmenge der zu polymerisierenden Monomeren, nicht überschreiten.

Vorzugsweise beträgt die Menge der eingesetzten Salze von phosphorhaltigen Säuren, bezogen auf die Gesamtmenge der zu polymerisierenden Monomeren, 0,1 bis 2,0 Gew. %.

Dabei kann die Gesamtmenge an wasserlöslichem Salz von phosphorhaltigen Säuren bereits zu Beginn der Emulsionspolymerisation vorgelegt werden oder ein Teil des wasserlöslichen Salzes von phosphorhaltigen Säuren wird zu Beginn vorgelegt und der Rest wird nach dem Starten der Polymerisation in ein oder mehreren Schritten oder kontinuierlich zugegeben. Die Zugabe kann getrennt erfolgen oder zusammen mit anderen Komponenten, wie Monomeren und/oder Emulgatoren und/oder Initiatoren.

Im erfindungsgemäßen Verfahren können neben Emulgatoren gegebenenfalls auch Schutzkolloide eingesetzt werden. Bei den Schutzkolloiden handelt es sich um polymere Verbindungen, in der Regel mit Molekulargewichten von größer als 2000 g/mol, wohingegen es sich bei den Emulgatoren um niedermolekulare Verbindungen handelt, deren relative Molekulargewichte in der Regel unter 2000 g/mol liegen.

Beispiele für Schutzkolloide sind polymere Naturstoffe, wie Stärke, Gummi Arabicum, Alginate oder Traganth; polymere modifizierte Naturstoffe, wie Methyl-, Ethyl-, Hydroxyethyl- oder Carboxymethylcellulose oder mittels gesättigter Säuren oder Epoxiden modifizierte Stärke; polymere synthetische Substanzen wie Polyvinylalkohol (mit oder ohne Restacetylgehalt) oder teilweise veresterter oder acetalisierter oder mit gesättigten Resten veretherter Polyvinylalkohol; sowie Polypeptide, wie Gelatine, aber auch Polyvinylpyrrolidon, Polyvinylmethylacetamid oder Poly(meth-)acrylsäure.

Der Gewichtsanteil derartiger gegebenenfalls anwesender Schutzkolloide, bezogen auf die Gesamtmenge der zur Herstellung eingesetzten Monomeren, beträgt üblicherweise bis zu 10 %.

Das Molekulargewicht der Homo- und/oder Copolymerisate der wässrigen Dispersionen kann durch Zugabe geringer Mengen einer oder mehrerer das Molekulargewicht regelnder Substanzen eingestellt werden. Diese sogenannten "Regler" werden im allgemeinen in einer Menge von bis zu 2 Gew. %, bezogen auf die zu polymerisierenden Monomeren, eingesetzt. Als "Regler" können alle dem Fachmann bekannten Substanzen eingesetzt werden. Bevorzugt sind z.B. organische Thioverbindungen, Silane, Allylalkohole und Aldehyde.

Darüber hinaus kann die wässrige Dispersion noch eine Reihe weiterer Substanzen, wie zum Beispiel Weichmacher, Konservierungsmittel, Mittel zum Einstellen des pH-Wertes und/oder Entschäumer enthalten.

Die Durchführung des erfindungsgemäßen Verfahrens kann auf unterschiedlichste Art und Weise erfolgen. So kann die Emulsionspolymerisation entweder durch Batchfahrweise, oder aber auch vorzugsweise durch kontinuierliche oder halbkontinuierliche Verfahren erfolgen.

Bei den halbkontinuierlichen Verfahren wird die Hauptmenge, beispielsweise mindestens 70 Gew.-%, vorzugsweise mindestens 90 Gew.-%, der zu polymerisierenden Monomeren kontinuierlich, einschließlich Stufen- oder Gradientenfahrweise, dem Polymerisationsansatz zugeführt. Diese Vorgehensweise wird auch als Monomerzulaufverfahren bezeichnet, wobei man unter Monomerzulauf das Zudosieren gasförmiger Monomerer, flüssiger Monomer(mischungen), Monomerlösungen oder insbesondere wässriger Monomeremulsionen versteht.

Dabei kann die Dosierung der einzelnen Monomeren durch separate Zuläufe erfolgen. Darüber hinaus ist es natürlich auch möglich die Dosierung der Monomeren in der Weise durchzuführen, dass die Mischung der dosierten Monomerzusammensetzungen so variiert wird, dass das resultierende Polymerisat unterschiedliche Polymerphasen aufweist, was sich beispielsweise im Auftreten von mehr als einer Glasübergangstemperatur bei Analyse des trockenen Polymers mittels Differential Scanning Calorimetrie ("DSC") äußert.

Die Polymerisationstemperatur bewegt sich in den für wässrige Emulsionspolymerisationen bekannten Temperaturbereichen. Typischerweise werden Temperaturen zwischen 25 und 100°C gewählt.

Im Anschluss an die eigentliche Polymerisationsreaktion kann es wünschenswert und/oder erforderlich sein, die erhaltene wässrige KunststoffDispersion weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomeren auch chemisch durch radikalische Nachpolymerisation, insbesondere durch Einwirkung von Redoxinitiatorsystemen, wie sie z.B. in der DE-A-4,435,423 beschrieben sind, erfolgen.

Die erfindungsgemäßen wässrigen Dispersionen enthalten gegebenenfalls weitere Einsatzstoffe, deren Auswahl sich nach dem jeweils gewünschten Einsatzgebiet richtet.

Beispiele für weitere Einsatzstoffe sind rheologiemodifizierende Additive, Entschäumer, Antislipadditive, Farbpigmente, antimikrobielle Konservierungsmittel, Weichmacher, Filmbildehilfsmittel und Mattierungsmittel.

Mit dem erfindungsgemäßen Verfahren lassen sich wässrige Polymerdispersionen mit hohem Feststoffgehalt herstellen. Diese zeichnen sich durch eine überraschend niedrige Viskosität und somit eine gute Verarbeitbarkeit aus.

Typische Feststoffgehalte bewegen sich bei mindestens 60 Gew. %, bezogen auf die Polymerdispersion.

Bevorzugte Polymerdispersionen weisen Feststoffgehalte von mindestens 70 Gew. %, insbesondere von 70 bis 75 Gew. % auf.

Typische dynamische Viskositäten bei Feststoffgehalten von 60 Gew. % liegen unterhalb von 3.000 mPa*sec, gemessen bei 25°C mit dem Brookfield Viskosimeter (Spindel #5, 20 Umdrehungen / Minute).

Typische dynamische Viskositäten bei Feststoffgehalten von 65 Gew. % liegen unterhalb von 8.000 mPa*sec, gemessen bei 25°C mit dem Brookfield Viskosimeter (Spindel #5, 20 Umdrehungen / Minute).

Typische dynamische Viskositäten bei Feststoffgehalten von 70 Gew. % liegen unterhalb von 15.000 mPa*sec, gemessen bei 25°C mit dem Brookfield Viskosimeter (Spindel #5, 20 Umdrehungen / Minute).

Besonders bevorzugte erfindungsgemäße Polymerdispersionen weisen Feststoffgehalte über 70 Gew. % und gleichzeitig derartig niedrige Viskositäten auf.

Die Partikelgrößenverteilungen der erfindungsgemäßen Dispersionen sind mindestens trimodal, sie können jedoch auch noch höher modal sein.

Die erfindungsgemäßen Dispersionen weisen besitzen in der Regel mittlere Teilchendurchmesser im Bereich zwischen 40 und 1.000 nm.

Die erfindungsgemäßen Dispersionen lassen sich in Klebstoff-Formulierungen sowie in Baustoffen, beispielsweise in Fugendichtmassen, Fußbodenklebern einsetzen.

Diese Verwendungen sind ebenfalls Gegenstand der vorliegenden Erfindung.

Die Erfindung wird durch die nachstehenden Beispiele erläutert.

### Beispiel 1

In einem 3-Liter Reaktor, ausgestattet mit einem Rückflusskühler und Ankerrührer, wurden 268,38 g entmineralisiertes Wasser (nachstehend "E-Wasser") und 8.68 g di-Natriumhydrogenphosphat x 12 H₂O vorgelegt und unter Rühren (Drehzahl 80 UPM) auf 75°C aufgeheizt. Bei dieser Temperatur wurden 48,35 g Monomeremulsion gemäß nachstehender Tabelle und der Startinitiator 1,05 g Ammoniumpersulfat ("APS") gelöst in 9,45 g E-Wasser in den Reaktor gegeben um die Polymerisation zu starten. 20 Minuten nach Start der Polymerisation wurde aus einem separaten Behälter mit der Zudosierung der Monomeremulsion begonnen. Die Dosierzeit betrug 4,5 Stunden.

**Tabelle: Zusammensetzung der Monomeremulsion (Angaben in Gramm)**

| | |
|---|---|
| E-Wasser | 238 |
| C₁₁-Alkylethoxylat mit 20 Mol EO (70%) | 15,20 |
| C₁₁-Alkylethersulfat mit 7 Mol EO (28%) | 65,50 |
| Methacrylsäure | 14,00 |
| Acrylsäure | 11,20 |
| Acetoacetoxyethylmethacrylat | 28,00 |
| Kaliumpersulfat | 4,20 |
| Butylacrylat | 840,0 |
| Methylmethacrylat | 252,0 |
| 2-Ethylhexylacrylat | 308,0 |
| n-Dodecanthiol | 1,40 |

Nach dem Dosieren wurden nochmals 1,05 g APS in 9,45 g E-Wasser zugegeben, nach 30 Minuten wurde 25,20 g Ammoniak (12.5%) zugetropft, anschließend wurde weitere 2 Stunden bei 75°C gerührt. Der Ansatz wurde auf 50°C abgekühlt und die 1. Reduktionsmittelmischung gemäß nachstehender Tabelle zugegeben. Nach weiteren 20 Minuten Rühren wurde die 2. Reduktionsmittelmischung zugesetzt und nochmals 20 Minuten weitergerührt. Anschließend wurde das Produkt abgekühlt.

**Zusammensetzung der 1. und 2. Reduktionsmittelmischung (Angaben in Gramm)**

| | |
|---|---|
| tert.Butylhydroperoxid (70 %ig) | 0,50 |
| E-Wasser | 3,15 |
| Na₂S₂O₅ | 0,18 |
| E-Wasser | 3,15 |

Die mit dem beschriebenen Verfahren erhältliche Dispersion war stippenfrei, hatte einen Feststoffgehalt von 71 Gew. % und war gut zu verarbeiten.

Die Messung der Partikelgrößenverteilung mit Hilfe der hochauflösenden analytischen Ultrazentrifuge (AUZ) zeigte bezüglich der Massenverteilung d_{w} drei voneinander getrennte Partikelpopulationen mit einem für eine dichte Packung idealen Verhältnis.

Teilchen mit einem mittleren Durchmesser von 457 nm wurden mit einem Anteil von 76 %, Teilchen mit einem mittleren Durchmesser von 167 nm wurden mit einem Anteil von 19 % und die kleinsten Teilchen mit einem mittleren Durchmesser von 47 nm mit 5 % in der Probe vorgefunden.

Die Viskosität, gemessen bei 25°C mit einem Brookfield Viskosimeter mit Spindel Nummer 5 und 20 U/Min, lag bei 13300 mPas.

Die Glasübergangstemperatur T_{g} (gemessen mittels DSC Methode) betrug -30°C.

### Beispiel 2

In einem 3-Liter Reaktor, ausgestattet mit einem Rückflusskühler und Ankerrührer, wurden 249,21 g Entmineralisiertes Wasser und 8,06 g di-Natriumhydrogenphosphat x 12 H₂O vorgelegt und unter Rühren (Drehzahl 80 UPM) auf 75°C aufgeheizt. Bei dieser Temperatur wurden 46,66 g Monomeremulsion gemäß nachstehender Tabelle und der Startinitiator 0,98 g APS gelöst in 8,78 g E-Wasser in den Reaktor gegeben um die Polymerisation zu starten. 20 Minuten nach Start der Polymerisation wurde aus einem separaten Behälter mit der Zudosierung der Monomeremulsion begonnen. Die Dosierzeit betrug 4,5 Stunden.

**Tabelle: Zusammensetzung der Monomeremulsion (Angaben in Gramm)**

| | |
|---|---|
| E-Wasser | 286,00 |
| C₁₁-Alkylethoxylat mit 20 Mol EO (70%) | 14,11 |
| C₁₁-Alkylethersulfat mit 7 Mol EO (28%) | 16,82 |
| Methacrylsäure | 13,00 |
| Acrylsäure | 10,40 |
| Acetoacetoxyethylmethacrylat | 26,00 |
| Kaliumpersulfat | 3,90 |
| Butylacrylat | 780,0 |
| Methylmethacrylat | 234,0 |
| 2-Ethylhexylacrylat | 286,0 |
| n-Dodecanthiol | 1,30 |

Nach dem Dosieren wurden nochmals 0,98 g APS in 8,78 g Wasser zugegeben. Nach 30 Minuten wurden 23,40 g Ammoniak (12,5%ig) zugetropft. Anschließend wurde weitere 2 Stunden bei 75°C gerührt. Der Ansatz wurde auf 50°C abgekühlt und die 1. Reduktionsmittelmischung gemäß nachstehender Tabelle zugegeben. Nach weiteren 20 Minuten Rühren wurde die 2. Reduktionsmittelmischung zugesetzt und nochmals 20 Minuten weitergerührt. Anschließend wurde das Produkt abgekühlt.

**Tabelle: Zusammensetzung der 1. und 2. Reduktionsmittelmischung (Angaben in Gramm)**

| | |
|---|---|
| tert.Butylhydroperoxid (70 %ig) | 0,46 |
| E-Wasser | 2,93 |
| Na₂S₂O₅ | 0,17 |
| E-Wasser | 2,93 |

Die mit dem beschriebenen Verfahren erhaltene Dispersion war stippenfrei, hatte einen Feststoffgehalt von 67,5% und war gut zu verarbeiten.

Die Viskosität, gemessen bei 25°C mit einem Brookfield Viskosimeter mit Spindel Nummer 5 und 20 U/Min., lag bei 7500 mPas.

Die Glasübergangstemperatur T_{g} (gemessen mittels DSC Methode) betrug -30°C.

### Anwendungsbeispiele

Die Dispersionen aus Beispiel 1 und 2 wurden auf ihre Verwendbarkeit als Bindemittel zur Herstellung von Fußbodenklebestoffen geprüft. Trotz der hohen Feststoffgehalte waren die Dispersionen gut handhabbar und ließen sich ohne Probleme zu gut verarbeitbaren Fußbodenklebstoffen modifizieren.

Die Harz- sowie Füllstoffverträglichkeit wurde mit Lagerversuchen getestet und gaben keinerlei Anlass zur Beanstandung.

Als Fußbodenkleber wurde folgende Rezeptur verwendet:

| | | |
|---|---|---|
| 35, 0 | Gew. % | der jeweiligen Dispersion |
| 10,0 | Gew. % | Wasser |
| 0,2 | Gew. % | Entschäumer (Agitan 305) |
| 0,2 | Gew. % | Konservierungsmittel (Mergal K11) |
| 0,5 | Gew. % | Dispergiermittel (Polyacrylat) |
| 1,2 | Gew. % | Dispergier- und Netzmittel (Polyphosphat) |
| 20,0 | Gew. % | Füllstoff Omyacarb 10 BG |
| 20,0 | Gew. % | Füllstoff Omyacarb 20 BG |
| 20,0 | Gew. % | eines Gemisches aus Kolophoniumharz, Alresat KE 300 und Butyldiglykolacetat, |
| 0,2 | Gew. % | Verdickungsmittel (Celluloseether) |

Prüfung der Einlegzeiten und Naßtack in einer Standard Fußbodenkleberrezeptur

| | Beispieldispersion 1 | | Beispieldispersion 2 | | Vergleichsbeispiel 3 | |
|---|---|---|---|---|---|---|
| Zeit [min.] | Klebkraft [g] | Benetzung [%] | Klebkraft [g] | Benetzung [%] | Klebkraft [g] | Benetzung [%] |
| 10 | 200 | 100 | 200 | 100 | 150 | 100 |
| 20 | 1000 | 100 | 800 | 100 | 550 | 100 |
| 30 | 2200 | 100 | 1400 | 100 | 800 | 100 |
| 40 | 4800 | 10 | 4300 | 80 | 2400 | 100 |
| 50 | - | - | 3500 | 0 | 2500 | 0 |
| Nachben. | 4500 | 0 | 4500 | 0 | 3500 | 0 |

Bereits 40 Minuten nach Aufbringen des Klebstoffs wurde eine Naßtack-Klebkraft von >= 4.300 g/5 cm Belagsbreite gemessen. Dieses garantiert, dass auch Beläge mit hoher Rückstellkraft am Boden gehalten werden können.

### Beispiel 3: (Vergleich)

Die Polymerisation wurde analog zu Beispiel 1 ohne di-Natriumhydrogenphosphat x 12 H₂O in der Vorlage durchgeführt. Es wurde ein extremes Ansteigen der Viskosität mit Koagulation des Ansatzes festgestellt.

### Beispiel 4 (Vergleich)

In einem 3-Liter Reaktor, ausgestattet mit einem Rückflusskühler und Ankerrührer, wurden 210,87 g entmineralisiertes Wasser vorgelegt und unter Rühren (Drehzahl 80 UPM) auf 75°C aufgeheizt. Bei dieser Temperatur wurden 50,25 g Monomeremulsion und der Startinitiator 0,83 g APS gelöst in 7,43 g E-Wasser in den Reaktor gegeben um die Polymerisation zu starten. 20 Minuten nach Start der Polymerisation wurde aus einem separaten Behälter mit der Zudosierung der Monomeremulsion gemäß nachstehender Tabelle begonnen. Die Dosierzeit betrugt 4,5 Stunden.

**Tabelle: Zusammensetzung der Monomeremulsion (Angaben in Gramm)**

| | |
|---|---|
| E-Wasser | 638,00 |
| C₁₁-Alkylethoxylat mit 20 Mol EO (70%) | 11,94 |
| C₁₁-Alkylethersulfat mit 7 Mol EO (28%) | 51,46 |
| Methacrylsäure | 11,00 |
| Acrylsäure | 8,80 |
| Acetoacetoxyethylmethacrylat | 22,00 |
| Kaliumpersulfat | 3,30 |
| Butylacrylat | 660,0 |
| Methylmethacrylat | 198,0 |
| 2-Ethylhexylacrylat | 242,0 |
| n-Dodecanthiol | 1,10 |

Nach dem Dosieren wurden nochmals 0,83 g APS in 7,43 g Wasser zugegeben. Nach 30 Minuten wurde 19,8 g Ammoniak (12.5%ig) zugetropft. Anschließend wurde weitere 2 Stunden bei 75°C gerührt. Der Ansatz wurde auf 50°C abgekühlt und die 1. Reduktionsmittelmischung gemäß nachstehender Tabelle zugegeben. Nach weiteren 20 Minuten Rühren wurde die 2. Reduktionsmittelmischung zugesetzt und nochmals 20 Minuten weitergerührt. Anschließend wurde das Produkt abgekühlt.

**Tabelle: Zusammensetzung der 1. und 2. Reduktionsmittelmischung (Angaben in Gramm)**

| | |
|---|---|
| tert.Butylhydroperoxid (70 %ig) | 0,39 |
| E-Wasser | 2,48 |
| Na₂S₂O₅ | 0,14 |
| E-Wasser | 2,48 |

Diese Dispersion zeigte keine Multimodalität der Teilchengroßenverteilung.

## Patentansprüche

1. Wässrige Polymerdispersion mit einer mindestens trimodalen Partikelgrößenverteilung abgeleitet von mindestens einem ethylenisch ungesättigten Monomeren und mit einem Feststoffgehalt von mindestens 60 Gew.%, bezogen auf die Polymerdispersion, enthaltend mindestens ein wasserlösliches Salz einer phosphorhaltigen Säure.

2. Wässrige Polymerdispersion nach Anspruch 1, **dadurch gekennzeichnet, dass** als ethylenisch ungesättigte Monomere Vinylester von Carbonsäuren mit 1 bis 18 Kohlenstoffatomen, Ester und/oder Halbester ethylenisch ungesättigter C₃-C₈-Mono- und Dicarbonsäuren mit gesättigten C₁-C₁₈ Alkanolen, aromatische oder aliphatische ethylenisch ungesättigte Kohlenwasserstoffe, die gegebenenfalls halogen substituiert sind oder aromatische Kohlenwasserstoffe mit ethylenisch ungesättigten Resten eingesetzt werden.

3. Wässrige Polymerdispersion nach Anspruch 1, **dadurch gekennzeichnet, dass** als ethylenisch ungesättigte Hauptmonomere Ester der Acrylsäure und/oder der Methacrylsäure mit primären und sekundären gesättigten einwertigen Alkoholen mit 1 bis 18 Kohlenstoffatomen eingesetzt werden.

4. Wässrige Polymerdispersion nach einem der Ansprüche 2 oder 3, **dadurch gekennzeichnet, dass** als weitere ethylenisch ungesättigte Monomere a,ß-ungesättigte Dicarbonsäuren, insbesondere Maleinsäure, Itaconsäure oder Citraconsäure, sowie deren Mono- oder Diester mit gesättigten einwertigen aliphatischen Alkoholen mit 1 bis 18 Kohlenstoffatomen, eingesetzt werden.

5. Wässrige Polymerdispersion nach Anspruch 1, **dadurch gekennzeichnet, dass** als ethylenisch ungesättigte Hauptmonomere Vinylester von gesättigten Fettsäuren mit ein bis acht Kohlenstoffatomen, insbesondere Vinylformiat, Vinylacetat, Vinylpropionat, Vinylisobutyrat, Vinylpivalat, Vinyl-2-ethylhexanoat; Vinylester von gesättigten verzweigten Monocarbonsäuren mit neun bis zehn Kohlenstoffatomen, Vinylester von gesättigten oder ungesättigten Fettsäuren mit zehn bis zwanzig Kohlenstoffatomen, sowie Vinylester der Benzoesäure und substituierter Derivate der Benzoesäure einsetzt werden, gegebenenfalls in Kombination mit α-Olefinen mit zwei bis achtzehn Kohlenstoffatomen, insbesondere mit Ethylen, Propylen und/oder Butylen, sowie mit aromatischen Kohlenwasserstoffen mit einem Vinylrest, insbesondere mit Styrol, Vinyltoluol oder Vinylxylol; sowie mit halogenierten ungesättigten aliphatischen Kohlenwasserstoffen, insbesondere mit Vinylchlorid, Vinylfluorid, Vinylidenchlorid und/oder Vinylidenfluorid, eingesetzt werden.

6. Wässrige Polymerdispersion nach Anspruch 1, **dadurch gekennzeichnet, dass** der Feststoffgehalt 65 bis 75 Gew. %, bezogen auf die Gesamtmasse der Polymerdispersion, beträgt.

7. Wässrige Polymerdispersion nach Anspruch 1, **dadurch gekennzeichnet, dass** diese nichtionische und/oder anionische Emulgatoren enthält.

8. Wässrige Polymerdispersion nach Anspruch 1, **dadurch gekennzeichnet, dass** diese mindestens ein wasserlösliches Natrium-, Kalium- oder Ammoniumsalz einer phosphorhaltigen Säure enthält.

9. Wässrige Polymerdispersion nach Anspruch 8, **dadurch gekennzeichnet, dass** das wasserlösliche Salz einer phosphorhaltigen Säure ausgewählt wird aus der Gruppe bestehend aus Natriummonophosphaten, insbesondere aus Mononatriumdihydrogenmonophosphat, Dinatrium-hydrogenmonophosphat und Trinatriummonophosphat, sowie Dinatrium-dihydrogenphosphat, Tetranatriumdiphosphat, Pentanatriumtriphosphat oder höher kondensierten Natriumpolyphosphaten, insbesondere Madrellsches Salz, Grahamsches Salz oder Kurrolsches Salz, sowie Natriumtrimetaphosphat und Natriumhexametaphosphat, den entsprechenden Ammoniumsalzen dieser Phosphate sowie Kombinationen von zwei oder mehreren dieser Verbindungen.

10. Wässrige Polymerdispersion nach Anspruch 1, **dadurch gekennzeichnet, dass** diese einen Feststoffgehalt von mindestens 60 Gew. % aufweist und eine dynamische Viskosität unterhalb von 3.000 mPa*sec, gemessen bei 25°C mit dem Brookfield Viskosimeter (Spindel #5, 20 Umdrehungen / Minute), besitzt.

11. Wässrige Polymerdispersion nach Anspruch 1, **dadurch gekennzeichnet, dass** diese einen Feststoffgehalt von mindestens 65 Gew. % aufweist und eine dynamische Viskosität unterhalb von 8.000 mPa*sec, gemessen bei 25°C mit dem Brookfield Viskosimeter (Spindel #5, 20 Umdrehungen / Minute), besitzt.

12. Wässerige Polymerdispersion nach Anspruch 1, **dadurch gekennzeichnet, dass** diese einen Feststoffgehalt von mindestens 70 Gew. % aufweist und eine dynamische Viskosität unterhalb von 15.000 mPa*sec, gemessen bei 25°C mit dem Brookfield Viskosimeter (Spindel #5, 20 Umdrehungen / Minute), besitzt.

13. Verfahren zur Herstellung von wässrigen Polymerdispersionen mit einer mindestens trimodalen Partikelgrößenverteilung durch Emulsionspolymerisation, wobei mindestens ein ethylenisch ungesättigtes Monomer in wässriger Phase in Gegenwart mindestens eines Emulgators und mindestens eines Initiators radikalisch polymerisiert wird, **dadurch gekennzeichnet, dass** die Emulsionspolymerisation in Gegenwart mindestens eines wasserlöslichen Salzes einer phosphorhaltigen Säure durchgeführt wird.

14. Verfahren nach Anspruch 13, **dadurch gekennzeichnet, dass** die Polymerisation bei Temperaturen zwischen 25 und 100°C erfolgt.

15. Verfahren nach Anspruch 13, **dadurch gekennzeichnet, dass** die Polymerisation in Gegenwart von anionischen und/oder nichtionischen Emulgatoren durchgeführt wird.

16. Verfahren nach Anspruch 13, **dadurch gekennzeichnet, dass** die Polymerisation in Gegenwart von mindestens einem Schutzkolloid durchgeführt wird.

17. Verwendung der wässrigen Polymerdispersionen nach Anspruch 1 in Klebstoff-Formulierungen sowie in Baustoffen, insbesondere in Fugendichtmassen und in Fußbodenklebern.

## Claims

1. An aqueous polymer dispersion having an at least trimodal particle size distribution derived from at least one ethylenically unsaturated monomer and with a solids content of at least 60% by weight, based on the polymer dispersion, comprising at least one water-soluble salt of a phosphorus acid.

2. The aqueous polymer dispersion as claimed in claim 1, wherein ethylenically unsaturated monomers used include vinyl esters of carboxylic acids having 1 to 18 carbon atoms, esters, including monoesters, of ethylenically unsaturated C₃-C₈ monocarboxylic and dicarboxylic acids with saturated C₁-C₁₈ alkanols, aromatic or aliphatic ethylenically unsaturated hydrocarbons with or without halogen substitution or aromatic hydrocarbons containing ethylenically unsaturated radicals.

3. The aqueous polymer dispersion as claimed in claim 1, wherein ethylenically unsaturated principal monomers used include esters of acrylic acid and/or of methacrylic acid with primary and secondary saturated monovalent alcohols having 1 to 18 carbon atoms.

4. The aqueous polymer dispersion as claimed in either of claims 2 and 3, wherein further ethylenically unsaturated monomers used include α,β-unsaturated dicarboxylic acids, especially maleic acid, itaconic acid or citraconic acid, and their monoesters or diesters with saturated monovalent aliphatic alcohols having 1 to 18 carbon atoms.

5. The aqueous polymer dispersion as claimed in claim 1, wherein ethylenically unsaturated principal monomers used include vinyl esters of saturated fatty acids having one to eight carbon atoms, in particular vinyl formate, vinyl acetate, vinyl propionate, vinyl isobutyrate, vinyl pivalate, and vinyl-2-ethylhexanoate; vinyl esters of saturated branched monocarboxylic acids having nine or ten carbon atoms, vinyl esters of saturated or unsaturated fatty acids having ten to twenty carbon atoms, and also vinyl esters of benzoic acid and of substituted derivatives of benzoic acid, if desired in combination with α-olefins having two to eighteen carbon atoms, in particular with ethylene, propylene and/or butylene, and also with aromatic hydrocarbons containing a vinyl radical, in particular with styrene, vinyltoluene or vinylxylene; and also with halogenated unsaturated aliphatic hydrocarbons, in particular with vinyl chloride, vinyl fluoride, vinylidene chloride and/or vinylidene fluoride.

6. The aqueous polymer dispersion as claimed in claim 1, wherein the solids content is from 65% to 75% by weight, based on the total mass of the polymer dispersion.

7. The aqueous polymer dispersion as claimed in claim 1, comprising nonionic and/or anionic emulsifiers.

8. The aqueous polymer dispersion as claimed in claim 1, comprising at least one water-soluble sodium, potassium or ammonium salt of a phosphorus acid.

9. The aqueous polymer dispersion as claimed in claim 8, wherein the water-soluble salt of a phosphorus acid is selected from the group consisting of sodium monophosphates, in particular from monosodium dihydrogen monophosphate, disodium hydrogen monophosphate and trisodium monophosphate, and also disodium dihydrogen phosphate, tetrasodium diphosphate, pentasodium triphosphate or sodium polyphosphates with higher degrees of condensation, in particular Madrell's salt, Graham's salt or Kurrol's salt, and also sodium trimetaphosphate and sodium hexametaphosphate, the corresponding ammonium salts of these phosphates, and combinations of two or more of these compounds.

10. The aqueous polymer dispersion as claimed in claim 1, having a solids content of at least 60% by weight and possessing a dynamic viscosity of below 3000 mPa*sec, measured at 25°C using a Brookfield viscometer (spindle #5, 20 revolutions/minute).

11. The aqueous polymer dispersion as claimed in claim 1, having a solids content of at least 65% by weight and possessing a dynamic viscosity of below 8000 mPa*sec, measured at 25°C using a Brookfield viscometer (spindle #5, 20 revolutions/minute).

12. The aqueous polymer dispersion as claimed in claim 1, having a solids content of at least 70% by weight and possessing a dynamic viscosity of below 15 000 mPa*sec, measured at 25°C using a Brookfield viscometer (spindle #5, 20 revolutions/minute).

13. A process for preparing an aqueous polymer dispersion having at least trimodal particle size distribution by emulsion polymerization, by subjecting at least one ethylenically unsaturated monomer to free-radical polymerization in aqueous phase in the presence of at least one emulsifier and of at least one initiator, which comprises carrying out the emulsion polymerization in the presence of at least one water-soluble salt of a phosphorus acid.

14. The process as claimed in claim 13, wherein the polymerization takes place at temperatures between 25 and 100°C.

15. The process as claimed in claim 13, wherein the polymerization is carried out in the presence of anionic and/or nonionic emulsifiers.

16. The process as claimed in claim 13, wherein the polymerization is carried out in the presence of at least one protective colloid.

17. The use of an aqueous polymer dispersion as claimed in claim 1 in adhesive formulations and also in building materials, in particular in joint-sealing compounds and in flooring adhesives.

## Revendications

1. Dispersion aqueuse de polymère avec une distribution granulométrique au moins trimodale dérivée d'au moins un monomère éthyléniquement insaturé et avec une teneur en matières solides d'au moins 60 % en poids, par rapport à la dispersion de polymère, contenant au moins un sel hydrosoluble d'un acide phosphoré.

2. Dispersion aqueuse de polymère selon la revendication 1, **caractérisée en ce qu'**on utilise comme monomère éthyléniquement insaturé des esters vinyliques d'acides carboxyliques avec 1 à 18 atomes de carbone, des esters et/ou hémi-esters d'acides mono- et dicarboxyliques éthyléniquement insaturés en C₃ à C₈ avec des alcanols saturés en C₁ à C₁₈, des hydrocarbures aromatiques ou aliphatiques éthyléniquement insaturés, qui sont éventuellement substitués par un halogène ou des hydrocarbures aromatiques avec des radicaux éthyléniquement insaturés.

3. Dispersion aqueuse de polymère selon la revendication 1, **caractérisée en ce qu'**on utilise comme monomère principal éthyléniquement insaturé des esters de l'acide acrylique et/ou de l'acide méthacrylique avec des alcools monovalents saturés primaires et secondaires ayant 1 à 18 atomes de carbone.

4. Dispersion aqueuse de polymère selon l'une des revendications 2 ou 3, **caractérisée en ce qu'**on utilise comme autres monomères éthyléniquement insaturés des acides dicarboxyliques α,β-insaturés, en particulier l'acide maléique, l'acide itaconique ou l'acide citraconique, et leurs mono- ou diesters avec des alcools aliphatiques monovalents saturés avec 1 à 18 atomes de carbone.

5. Dispersion aqueuse de polymère selon la revendication 1, **caractérisée en ce qu'**on utilise comme monomère principal éthyléniqùement insaturé des esters vinyliques d'acides gras saturés avec un à huit atomes de carbone, en particulier le formiate de vinyle, l'acétate de vinyle, le propionate de vinyle, l'isobutyrate de vinyle, le pivalate de vinyle, le 2-éthylhexanoate de vinyle, les esters vinyliques d'acides monocarboxyliques ramifiés saturés avec neuf à dix atomes de carbone, les esters vinyliques d'acides gras saturés ou insaturés avec dix à vingt atomes de carbone, et les esters de vinyle de l'acide benzoïque et les dérivés substitués de l'acide benzoïque, éventuellement en combinaison avec des α-oléfines avec deux à dix-huit atomes de carbone, en particulier avec l'éthylène, le propylène et/ou le butylène, et avec des hydrocarbures aromatiques ayant un radical vinyle, en particulier avec le styrène, le vinyltoluène ou le vinylxylène ; et avec des hydrocarbures aliphatiques halogénés insaturés, en particulier avec le chlorure de vinyle, le fluorure de vinyle, le chlorure de vinylidène et/ou le fluorure de vinylidène.

6. Dispersion aqueuse de polymère selon la revendication 1, **caractérisée en ce que** la teneur en matières solides est de 65 à 75 % en poids, par rapport à la masse totale de la dispersion de polymère.

7. Dispersion aqueuse de polymère selon la revendication 1, **caractérisée en ce que** celle-ci contient des émulsifiants non ioniques et/ou anioniques.

8. Dispersion aqueuse de polymère selon la revendication 1, **caractérisée en ce que** celle-ci contient au moins un sel hydrosoluble de sodium, potassium ou ammonium d'un acide phosphoré.

9. Dispersion aqueuse de polymère selon la revendication 8, **caractérisée en ce que** le sel hydrosoluble d'un acide phosphoré est choisi dans le groupe constitué des monophosphates de sodium, en particulier le dihydrogénomonophosphate de monosodium, l'hydrogénomonophosphate de disodium et le monophosphate de trisodium, et le dihydrogénophosphate de disodium, le diphosphate de tétrasodium, le triphosphate de pentasodium ou des polyphosphates de sodium condensés supérieurs, en particulier le sel de Madrell, le sel de Graham ou le sel de Kuroll, et le trimétaphosphate de sodium et l'hexamétaphosphate de sodium, les sels d'ammonium correspondants de ces phosphates et les combinaisons de deux ou plus de ces composés.

10. Dispersion aqueuse de polymère selon la revendication 1, **caractérisée en ce que** celle-ci présente un teneur en matières solides d'au moins 60 % en poids et une viscosité dynamique inférieure à 3 000 mPa·s, mesurée à 25 °C avec le viscosimètre Brookfield (aiguille n° 5, 20 tours/minute).

11. Dispersion aqueuse de polymère selon la revendication 1, **caractérisée en ce que** celle-ci présente une teneur en matières solides d'au moins 65 % en poids et une viscosité dynamique inférieure à 8 000 mPa·s, mesurée à 25 °C avec le viscosimètre Brookfield (aiguille n° 5, 20 tours/minute).

12. Dispersion aqueuse de polymère selon la revendication 1, **caractérisée en ce que** celle-ci présente une teneur en matières solides d'au moins 70 % en poids et une viscosité dynamique inférieure à 15 000 mPa·s, mesurée à 25 °C avec le viscosimètre Brookfield (aiguille n° 5, 20 tours/minute).

13. Procédé de préparation de dispersions aqueuses de polymères avec une distribution granulométrique au moins trimodale par polymérisation en émulsion, dans lequel on polymérise par voie radicalaire au moins un monomère éthyléniquement insaturé en phase aqueuse en présence d'au moins un émulsifiant et d'au moins un amorceur, **caractérisé en ce qu'**on effectue la polymérisation en émulsion en présence d'au moins un sel hydrosoluble d'un acide phosphoré.

14. Procédé selon la revendication 13, **caractérisé en ce que** l'on effectue la polymérisation à des températures entre 25 et 100 °C.

15. Procédé selon la revendication 13, **caractérisé en ce que** l'on effectue la polymérisation en présence d'émulsifiants anioniques et/ou non ioniques.

16. Procédé selon la revendication 13, **caractérisé en ce que** l'on effectue la polymérisation en présence d'au moins un colloïde protecteur.

17. Utilisation de la dispersion aqueuse de polymère selon la revendication 1 dans des formulations de colles et dans des matériaux de construction, en particulier dans des matériaux d'étanchéité et dans des colles à planchers.
